Europäisches Patentamt

European Patent Office

Office européen des brevets

(11) Veröffentlichungsnummer: **0 281 057 B1**

(19)

# EUROPÄISCHE PATENTSCHRIFT

(12)

(45) Veröffentlichungstag der Patentschrift: **11.05.94**

(51) Int. Cl.⁵: **G07F 7/10**, G07C 9/00

(21) Anmeldenummer: **88103012.6**

(22) Anmeldetag: **29.02.88**

(54) **Schaltungsanordnung zur Sicherung des Zugangs zu einem Datenverarbeitungssystem mit Hilfe einer Chipkarte.**

(30) Priorität: **04.03.87 DE 3706955**
**12.08.87 DE 3726881**

(43) Veröffentlichungstag der Anmeldung:
**07.09.88 Patentblatt 88/36**

(45) Bekanntmachung des Hinweises auf die
Patenterteilung:
**11.05.94 Patentblatt 94/19**

(84) Benannte Vertragsstaaten:
**AT BE CH DE ES FR GB IT LI LU NL SE**

(56) Entgegenhaltungen:
**EP-A- 0 055 986        EP-A- 0 063 794**
**EP-A- 0 064 779        EP-A- 0 138 320**
**EP-A- 0 140 013        EP-A- 0 148 960**

(73) Patentinhaber: **Siemens Nixdorf Informations-**
**systeme Aktiengesellschaft**
**Fürstenallee 7**
**D-33102 Paderborn(DE)**

(72) Erfinder: **Beutelspacher, Albrecht, Prof.**
**Schwalbenstrasse 78**
**D-8012 Ottobrunn(DE)**
Erfinder: **Kersten, Annette-Gabriele**
**Frauenlobstrasse 6**
**D-6200 Wiesbaden(DE)**
Erfinder: **Kruse, Dietrich**
**Ulmenstrasse 9**
**D-8012 Ottobrunn(DE)**

(74) Vertreter: **Fuchs, Franz-Josef, Dr.-Ing. et al**
**Postfach 22 13 17**
**D-80503 München (DE)**

## Beschreibung

Die Erfindung betrifft eine Schaltungsanordnung nach den Merkmalen des Oberbegriffs des Anspruchs 1.

Eine derartige Schaltungsanordnung ist in Zusammenhang mit einem System zur gegenseitigen verschlüsselten Identifikation von Datenübertragungsstationen im Prinzip aus EP-A 0 064 779 bekannt.

In modernen Datenverarbeitungs- und Kommunikationssystemen spielt der Schutz der Daten eine immer wichtigere Rolle. Die Qualität eines Systems in bezug auf einen ausreichenden Datenschutz hängt dabei entscheidend davon ab, inwieweit es gelingt, daß der Zugriff zum System nur für berechtigte Personen möglich ist und umgekehrt nichtberechtigte Personen mit absoluter Sicherheit ausgesperrt bleiben. Eine einfache, wenn auch nicht absolut sichere Möglichkeit zur Überprüfung der Zugangsberechtigung zu einem System sind zum Beispiel sogenannte Paßwörter, die nur dem berechtigten Benutzer bekannt sind und die vom Benutzer beliebig oft geändert werden können. Da bei Paßwörtern die Gefahr besteht, daß sie von Unbefugten ausgespäht oder abgehört werden können, sind zusätzliche Sicherungsmaßnahmen unverzichtbar. Eine dieser Maßnahmen ist zum Beispiel die Ver- und Entschlüsselung der übertragenen Information, eine Maßnahme, die bei Datenverarbeitungssystemen unter anderem auch mit Hilfe der Chipkarte realisierbar ist.

Mit der zunehmenden Einbeziehung der Chipkarte in Datenverarbeitungssysteme entsteht andererseits wieder ein zusätzliches Sicherheitsrisiko, weil Chipkarten relativ leicht verlorengehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe befugt zu sein, an geheime Informationen im System gelangen kann. Eine wesentliche Voraussetzung für die Authentifikation ist ein persönliches, nicht kopierbares Merkmal des Teilnehmers. Dieses nichtkopierbare Merkmal des Teilnehmers wird mit Hilfe eines geheimen Schlüssels für die Ver- und Entschlüsselung erreicht, der den beiden Partnern, das heißt einerseits der Chipkarte und andererseits dem System, und zwar nur diesen beiden Partnern bekannt ist. Die Sicherheit kann zusätzlich noch dadurch erhöht werden, daß in der Chipkarte unter Einbeziehung dieses geheimen Schlüssels eine Zufallszahl generiert wird, die von der Chipkarte an das System übertragen wird. Es wäre an sich denkbar, dieses Zufallszahlen programmtechnisch zu erzeugen. Nach Ansicht von Sicherheitsexperten sind derart erzeugte Zufallszahlen aber nicht zufällig genug und damit letztlich nicht sicher genug.

Der vorliegenden Erfindung liegt nun die Aufgabe zugrunde, für die Erzeugung von Zufallszahlen einen höchsten Sicherheitsanforderungen genügenden Realisierungsweg aufzuzeigen.

Die Lösung dieser Aufgabe ergibt sich erfindungsgemäß durch die kennzeichnenden Merkmale des Anspruchs 1.

Die logische Verknüpfung eines variablen, ggf. auch Konstanten Startwertes als erster Eingangsgröße mit einer vorher gespeicherten Zufallszahl als zweiter Eingangsgröße zu einem variablen Wert hat den Vorteil, daß mit Hilfe dieses variablen Wertes eine neue, beliebig "zufällige" Zufallszahl generierbar ist.

Vorteilhafte Weiterbildungen der Erfindung ergeben sich aus den Merkmalen der Unteransprüche.

Im folgenden wird ein Ausführungsbeispiel der Erfindung anhand der Zeichnung näher erläutert.

Dabei zeigen

FIG 1, 2  je eine Chipkarte bekannter Art mit einem durch einen variablen Startwert angestoßenen Zufallsgenerator

FIG 3, 4  ein Beispiel für einen Zufallszahlengenerator in der Start- und in der Signalausgabephase.

FIG 5  eine Chipkarte mit einer Schaltungsanordnung gemäß der Erfindung.

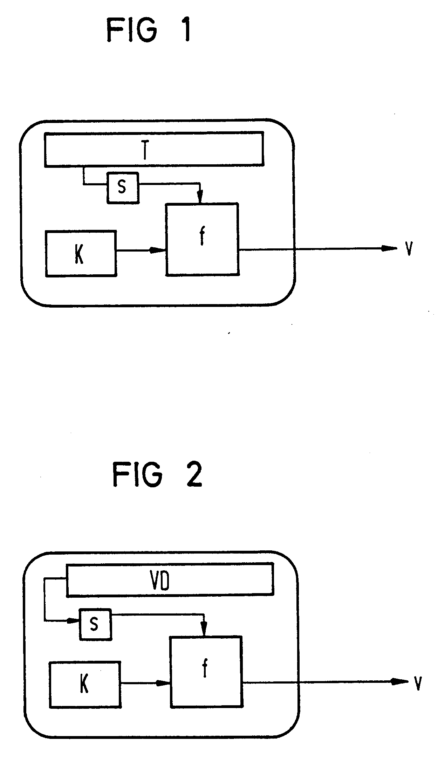

Die FIG 1 zeigt den prinzipiellen Aufbau einer bekannten Prozessor-Chipkarte, die einen im integrierten Baustein implementierten Zufallsgenerator enthält. Die Generierung der Zufallszahlen erfolgt mit Hilfe des gespeicherten Geheimschlüssels K und eines im Mikroprozessor implementierten Chiffrieralgorithmus f, wobei zur Berechnung einer ausreichend "zufälligen" Zufallszahl v ein variabler Startwert s als Eingangsgröße für den Zufallsgenerator verwendet wird. Dieser variable Startwert s kann, wie aus FIG 1 ersichtlich, aus dem Ausgangssignal eines im integrierten Baustein implementierten Echtzeit-Uhrenbausteins T gewonnen werden. Diese Maßnahme setzt allerdings voraus, daß die Chipkarte eine Batterie zur Speisung des Uhrenbausteins T enthält.

Eine etwas einfachere Lösung zeigt FIG 2. Hier wird der Startwert für den Zufallszahlengenerator aus im Chip gespeicherten variablen Daten VD abgeleitet bzw. ausgewählt. Schließlich besteht auch noch die Möglichkeit, den Startwert nicht in der Chipkarte selbst zu generieren, sondern diesen Startwert von außen an die Chipkarte zu übergeben.

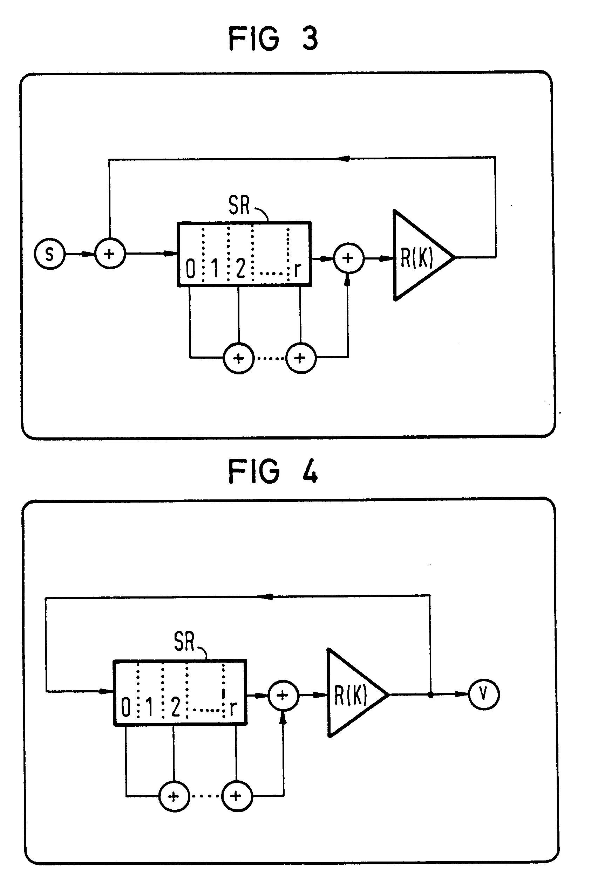

Die Figuren 3 und 4 zeigen einen in der Chipkarte nach den Figuren 1 und 2 verwendbaren Zufallszahlengenerator, der zum Beispiel auf einem nichtlinear rückgekoppelten Schieberegister basiert. Im einzelnen besteht dieser Zufallszahlengenerator aus einem Schieberegister SR von der Länge r, dem am Eingang der Startwert s mit zum Beispiel 64 Bit zugeführt wird. Durch eine Linearkombination einzelner Registerzellen wird der Inhalt dieser Zellen mit dem Ausgang des Schieberegisters verknüpft. Der zyklusweise durchgeschobene Inhalt des Schieberegisters SR wird in einem nachfolgenden Baustein R(K) einer vom Schlüssel K (zum Beispiel 64 Bit) abhängigen nichtlinearen Funktion unterworfen. Der Ausgang dieses Bausteins R(K) wird während der Zyklusphase auf den Eingang des Schieberegisters SR zurückgekoppelt. FIG 4 zeigt den Zeitpunkt nach Abschluß der Zyklusphase, bei dem die Zufallszahl v mit ebenfalls 64 Bit am Ausgang des Bausteins R(K) zur Verfügung steht.

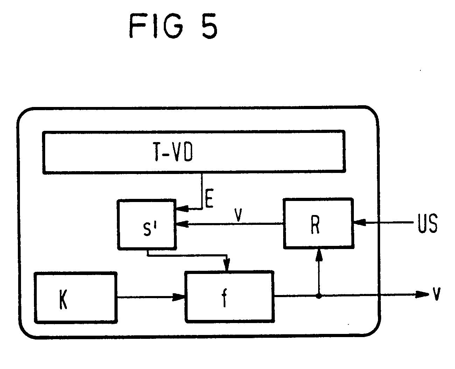

Die FIG 5 zeigt eine Schaltungsanordnung gemäß der Erfindung, die sich insofern von den Anordnungen nach FIG 1 oder 2 unterscheidet, als der Startwert s nicht unmittelbar aus dem Ausgangssignal des Uhrenbausteins T oder aus variablen Daten VD (erste Eingangsgröße E) gebildet wird, sondern daß zusätzlich eine logische Verknüpfung mit einer weiteren Eingangsgröße stattfindet. Diese weitere Eingangsgröße ist eine vorher erzeugte Zufallszahl v, die in einem Register R, beispielsweise in einem Register eines elektrisch löschbaren programmierbaren Lesespeichers EEPROM oder in einem Schreib-Lesespeicher RAM zwischengespeichert ist. Durch die logische Verknüpfung, beispielsweise mit Hilfe eines EXKLUSIV-ODER-Gliedes, werden selbst bei gleichgebliebener erster Eingangsgröße E ein geänderter Startwert s' und eine entsprechend geänderte neue Zufallszahl v generiert. Da für die allererste Generierung einer Zufallszahl v noch keine "alte" Zufallszahl zur Verfügung steht, wird vorgeschlagen, bei der Personalisierung der Chipkarte einen zufallsgenerierten "Ur-Startwert" US in das Register R einzuschreiben.

**Patentansprüche**

1. Schaltungsanordnung zur Sicherung des Zugriffs zu einem Datenverarbeitungssystems mit Hilfe einer Chipkarte, deren integrierter Baustein einen Mikroprozessor enthält, unter Verwendung eines gemeinsamen, sowohl in der Chipkarte als auch in einem zugehörigen Benutzerterminal hinterlegten Geheimschlüssels (K) und eines im Mikroprozessor implementierten Chiffrieralgorithmus (f), aus denen in Abhängigkeit von einem variablen Wert (s') eine Zufallszahl (v) gemäß der Beziehung

$$v = f(K;s')$$

generierbar ist, **gekennzeichnet durch** ein Register (R) zur Speicherung der vorher erzeugten Zufallszahl (v) und durch eine Einrichtung zur logischen Verknüpfung eines Startwertes (s) als erster Eingangsgröße (E) mit der gespeicherten Zufallszahl (v) als zweiter Eingangsgröße zur Generierung des variablen Wertes (s').

2. Schaltungsanordnung nach Anspruch 1, **dadurch gekennzeichnet,** daß der Startwert (s) aus im integrierten Baustein (T-VD) der Chipkarte gespeicherten Daten ausgewählt wird.

3. Schaltungsanordnung nach Anspruch 1 oder 2, **dadurch gekennzeichnet,** daß als erster Speichereintrag in das Register (R) ein die Chipkarte personalisierender Ur-Startwert (US) einspeicherbar ist.

**Claims**

1. Circuit arrangement for protecting access to a data processing system with the aid of a chip card, the integrated chip of which contains a microprocessor, employing a common secret key (K) stored in both the chip card and in an associated user terminal and a ciphering algorithm (f) implemented in the microprocessor, from which a random number (v) can be generated according to the relationship

$$v = f(K;s')$$

depending on a variable value (s'), characterized by a register (R) for storing the previously generated random number (v) and by a means for logically gating a start value (s) as first input variable (E) with the stored random number (v) as second input variable for generating the variable value (s').

2. Circuit arrangement according to Claim 1, characterized in that the start value (s) is selected from data stored in the integrated chip (T-VD) of the chip card.

3. Circuit arrangement according to Claim 1 or 2, characterized in that an original start value (US) that personalizes the chip card can be stored in the register (R) as the first storage entry.

**Revendications**

1. Montage pour protéger l'accès à un système de traitement de données à l'aide d'une carte à puce, dont le module intégré comporte un microprocesseur, moyennant l'utilisation d'un code secret commun (K), mémorisé aussi bien dans la carte à puce que dans un terminal d'utilisateur associé, et d'un algorithme de chiffrage (f) mis en oeuvre dans le microprocesseur et à partir duquel un nombre aléatoire (v) correspondant à la relation

$$v = f(K;s')$$

peut être produit en fonction d'une valeur variable (s'), caractérisé par un registre (R) servant à mémoriser le nombre aléatoire (v) produit précédemment, et par un dispositif servant à combiner logiquement une valeur initiale (s) en tant que première grandeur d'entrée (E) au nombre aléatoire mémorisé (v) en tant que seconde grandeur d'entrée pour la production de la valeur variable (s').

2. Montage suivant la revendication 1, caractérisé par le fait que la valeur initiale (s) est sélectionnée à partir de données mémorisées dans le module intégré (T-VD) de la carte à puce.

3. Montage suivant la revendication 1 ou 2, caractérisé par le fait qu'une valeur initiale de départ (US), qui personnalise la carte à puce, peut être mémorisée en tant que première entrée de mémoire, dans le registre (R).

# FIG 1

# FIG 2

## FIG 3

## FIG 4

## FIG 5